# EUROPÄISCHE PATENTSCHRIFT

(11) **EP 2 330 022 B1**
(45) Veröffentlichungstag und Bekanntmachung des Hinweises auf die Patenterteilung: **15.02.2012**
(21) Anmeldenummer: 09177666.6
(22) Anmeldetag: 01.12.2009
(51) Int. Cl.: B62D 33/04, B62D 33/023

(54) **Doppelwandiger Wandabschnitt sowie Fahrzeugaufbau oder Container mit einem derartigen Wandabschnitt**
Double walled wall section and vehicle body or container with such a wall section
Section murale à double paroi ainsi que châssis de véhicule ou conteneur doté d'une telle section murale

(43) Veröffentlichungstag der Anmeldung: 08.06.2011
(73) Patentinhaber: Kerex s.r.o., 07101 Michalovce (SK)
(72) Erfinder: Kerekes, Ján, 07101 Michalovce (SK)
(74) Vertreter: Bergmeier, Werner

(56) Entgegenhaltungen:
- WO-A1-01/59311
- DE-A1- 4 311 497
- DE-A1- 19 527 569
- DE-U1-202008 011 211
- GB-A- 1 523 964

## Beschreibung

Die vorliegende Erfindung betrifft einen doppelwandigen Wandabschnitt für einen Fahrzeugaufbau, wie beispielsweise einen Wechselaufbau oder Sattelauflieger für Lastkraftwagen, oder einen Großraumbehälter, insbesondere einen Container, wobei der Wandabschnitt eine im Wesentlichen ebene Innenseite und eine im Wesentlichen ebene Außenseite sowie ein vorzugsweise durchgängiges Grundprofil aufweist, das Grundprofil derart abgekantet ist, dass es zur Innenseite gerichtete Innenabschnitte und zur Außenseite gerichtete Außenabschnitte aufweist, die Innenabschnitte und die Außenabschnitte parallel zueinander verlaufen, und das Grundprofil zwischen den Innenabschnitten und den Außenabschnitten in Form von abgekanteten Zwischenabschnitten verläuft, wobei jeweils zwei Zwischenabschnitte mit einem dazwischen angeordneten Außenabschnitt eine Innenvertiefung und zwei Zwischenabschnitte mit einem dazwischen angeordneten Innenabschnitt eine Außenvertiefung begrenzen. Zudem wird ein Fahrzeugaufbau, insbesondere Wechselaufbau oder Sattelauflieger für Lastkraftwagen, bzw. ein Großraumbehälter, insbesondere Container, mit einem Bodenabschnitt und wenigstens einem Wandabschnitt vorgeschlagen.

Entsprechende Wandabschnitte bzw. -profile sind im Stand der Technik hinlänglich bekannt. So schlägt beispielsweise die DE 20 2005 005 358 U1 eine Verbindung von mehreren Profilteilen vor, so dass diese schließlich ein durchgehendes Wandprofil bilden. Hierbei weist jedes Profilteil einen Mittelteil und zwei gegenüberliegende Randbereiche auf, wobei die Randbereiche mehrfach abgekantet sind und benachbarte Profilteile mit den Randbereichen ineinander greifen. Die Verbindung zeichnet sich dadurch aus, dass zumindest einer der beiden Randbereiche mit dem Mittelteil einen Kantungswinkel von weniger als 90° einschließt und die Randbereiche weiterhin derart abgekantet sind, dass sich zwei benachbarte Längsprofile unter Vorspannung miteinander verhaken. Auch wenn hierdurch eine recht hohe Stabilität der Wandung erzielt werden kann, ist der Aufbau und insbesondere die Montage recht aufwändig, so dass in dieser Beziehung Verbesserungsbedarf besteht.

Des Weiteren wird durch die DE 195 27 569 A1 eine Bordwand für Fahrzeuge, insbesondere für Muldenaufbauten, beschrieben. Die Bordwand besitzt eine in der Gebrauchslage innen liegende Wandfläche und eine in der Gebrauchslage außen liegende Wandfläche, die sich zur innen liegenden Wandfläche auf Abstand befindet. Hierdurch soll gewährleistet werden, dass unter Beibehaltung einer hohen Belastbarkeit der Mulden das optische Erscheinungsbild der Außenfläche auch bei Verbeulung des inneren Muldenbleches erhalten bleibt, um insbesondere den hohen Anforderungen als Beschriftungs- bzw. Werbefläche zu genügen. Erfindungsgemäß wird vorgeschlagen, dass die innen liegende Wandfläche eine starke Belastungen standhaltende Wandstärke und die außen liegende Wandfläche eine dazu deutlich geringere Wandstärke aufweist, wobei zwischen den Wandflächen Abstand haltende Profilbleche vorgesehen sind. Hierdurch entsteht jedoch eine Wandfläche mit einer Vielzahl von Überlappungen der jeweiligen Blechelemente, so dass die Bordwand ein erhöhtes Gewicht aufweist und zudem einen hohen Materialeinsatz fordert.

Es ist daher Aufgabe der Erfindung, einen Wandabschnitt sowie einen Fahrzeugaufbau bzw. Container mit einem entsprechenden Wandabschnitt vorzuschlagen, wobei sich der Wandabschnitt durch eine hohe Stabilität bei dennoch einfach zu montierendem Aufbau auszeichnen soll.

Gelöst wird diese Aufgabe hinsichtlich des Wandabschnitts dadurch, dass die Außenvertiefungen mit Außenabdeckungen versehen sind, die zwischen zwei benachbarten Zwischenabschnitten verlaufen und mit den an diese Zwischenabschnitte angrenzenden Außenabschnitten die Außenseitedes Wandabschnitts bilden und die Innenvertiefungen mit Innenabdeckungen versehen sind, die zwischen zwei benachbarten Zwischenabschnitten verlaufen und mit den an diese Zwischenabschnitte angrenzenden Innenabschnitten die Innenseite des Wandabschnitts bilden. Hierdurch entsteht ein Wandabschnitt mit einem gesickten Grundprofil, das jeweils abwechselnd einen Teil der Innenseite und einen Teil der Außenseite bildet. Der Rest der Innenseite wird durch die Innenabdeckungen und der Rest der Außenseite entsprechend durch die Außenabdeckungen gebildet. Blickt man auf die Außenseite, so wechseln sich somit Außenabschnitte und Außenabdeckungen in Querrichtung des Wandabschnitts ab. Analog gilt dies auch für die Innenseite, bei der sich Innenabschnitte und Innenabdeckungen abwechseln. Im Ergebnis erhält man einen doppelwandigen Wandabschnitt mit zwei parallelen Flächen, nämlich die beschriebene Außenseite und die Innenseite. Durch die abgekantete Form des Grundprofils wird zudem eine hohe Stabilität des Wandabschnitts sichergestellt, wobei durch die Ausgestaltung als Doppelwand der Vorteil erreicht wird, dass Beschädigungen der Außenwand nicht unbedingt zu einer Verformung der Innenwand führen und umgekehrt.

Besonders vorteilhaft ist es, wenn die Innenabdeckungen und/oder Außenabdeckungen mit benachbarten Zwischenabschnitten in Verbindung stehen. Zwar ist es auch möglich, dass die Innen- und Außenabdeckungen flächig verlaufen und lediglich mit den benachbarten Innen- und Außenabschnitten in Verbindung stehen. Sind die genannten Abdeckungen jedoch entsprechend abgekantet, dass die abgekanteten Abschnitte mit den Zwischenabschnitten verbunden werden können, so wird die Stabilität deutlich erhöht. Auch können die Abdeckungen über die Zwischenabschnitte direkt mit dem Grundprofil verbunden werden, so dass die jeweilige Außen- und/oder Innenseite des Wandabschnitts möglichst eben ausgestaltet werden kann.

Auch ist es von Vorteil, wenn die Innenabdeckungen und/oder Außenabdeckungen mit dem Grundprofil durch Schweißen, Kleben und/oder mit Hilfe von Schraub- oder Nietverbindungen verbunden sind. Derartige Verbindungen gewährleisten einen sicheren Halt, wobei insbesondere die zuletzt genannten Verbindungen einen Austausch der jeweiligen Innen- bzw. Außenabdeckungen ermöglichen.

Ebenso bringt es Vorteile mit sich, wenn die Innenabdeckungen mit dem Grundprofil durch Schweißen und die Außenabdeckungen mit dem Grundprofil mit Hilfe von Schraub- oder Nietverbindungen verbunden sind. Insbesondere im Bereich der Innenseite des Wandabschnitts ist eine erhöhte Stabilität erforderlich, da diese Seite nach dem Einbau in einen Fahrzeugaufbau oder Container mit entsprechendem Transportgut oder auch Gabelstaplerzinken in Kontakt kommen kann. Ist die Innenabdeckung mit dem Grundprofil verschweißt, so besteht eine strapazierfähige Verbindung, die insbesondere auch verhindert, dass Beschädigungen der Innenseite eine Verbeulung der Außenseite des Wandabschnitts zur Folge haben. Hingegen ist es von Vorteil, wenn die Außenseite möglichst eben ausgestaltet ist, um auf dieser Werbebotschaften, Firmenlogos oder andere Verzierungen anbringen zu können. Deshalb bieten sich zur Befestigung der Außenabdeckungen Verbindungslösungen an, die von außen nicht sichtbar sind. Sind die Außenabdeckungen, wie bereits beschrieben, abgekantet und stehen mit den von außen nicht sichtbaren Zwischenabschnitten und/oder Innenabschnitten in Kontakt, so kann dieser Kontakt genutzt werden, um beide Elemente in diesem Bereich beispielsweise mit Hilfe von Nieten oder Schrauben zu verbinden, die zudem leicht wieder lösbar sind. Auf diese Weise ist bei einer Beschädigung der Außenabdeckungen ein leichter Austausch derselben möglich.

Vorteilhaft ist zudem, wenn zwischen den Innenabdeckungen und dem Grundprofil und/oder zwischen den Außenabdeckungen und dem Grundprofil eine Dichtmasse, wie beispielsweise Polyurethan, angeordnet ist. Hierdurch wird auf einfache Weise der Eintritt von Flüssigkeit in den Wandabschnitt bzw. in den Innenraum eines damit ausgestatteten Fahrzeugaufbaus oder Containers verhindert. Die Dichtmasse kann dabei punktförmig oder auch flächig aufgetragen sein und die komplette Berührungsfläche zwischen den Abdeckungen und dem Grundprofil oder auch nur einige Abschnitte hiervon bedecken.

Vorteilhafterweise verlaufen die Zwischenabschnitte im Wesentlichen senkrecht zu den Innenabschnitten und/oder den Außenabschnitten und legen hierbei durch ihre Geometrie deren Abstand zueinander fest. Hierdurch entsteht eine besonders hohe Stabilität des Wandabschnitts, insbesondere in eine Richtung senkrecht zur Außen- bzw. Innenseite. Das Grundprofil ist in diesem Fall in den Übergangsbereichen zwischen Außenabschnitt und Zwischenabschnitt bzw. zwischen Innenabschnitt und Zwischenabschnitt um jeweils 90° abgekantet.

In einer weiteren vorteilhaften Weiterbildung der Erfindung verlaufen die Zwischenabschnitte in einem spitzen oder stumpfen Winkel hinsichtlich der Innenabschnitte bzw. der Außenabschnitte und legen ebenso deren Abstand zueinander fest. Eine derartige Ausgestaltung resultiert schließlich in trapezförmigen Innen- und Außenvertiefungen, so dass die Stabilität insbesondere parallel zur Innen- und Außenfläche erhöht wird. Auch sind senkrechte und spitze bzw. stumpfe Übergänge in beliebigem Wechsel möglich.

Außerdem ist es besonders vorteilhaft, wenn die Innenabdeckungen und/oder Außenabdeckungen einen im Wesentlichen rechteckigen, U-förmigen oder C-förmigen Querschnitt aufweisen. Während ein rechteckiger und ein C-förmiger Querschnitt eine Befestigung der Abdeckungen über die parallel verlaufenden Abschnitte des Grundprofils ermöglichen, werden U-förmige Abdeckungen vorzugsweise mit den Zwischenabschnitten verbunden. Ebenso sind selbstverständlich auch andere Querschnitte, beispielsweise in Form eines Omegas, denkbar. Ebenso können die Abkantungsbereiche abgerundet oder auch scharfkantig ausgebildet sein. Im Prinzip können sämtliche Profile zum Einsatz kommen, die eine Außen- bzw. Innenabdeckung der Außen- und Innenvertiefungen ermöglichen.

Besondere Vorteile bringt es mit sich, wenn die Innenabdeckungen einen im Wesentlichen U-förmigen Querschnitt und die Außenabdeckungen einen im Wesentlichen C-förmigen Querschnitt aufweisen. Wie bereits beschrieben, ist es auf der Innenseite notwendig, eine stabile Verbindung zwischen Grundprofil und Innenabdeckung zu gewährleisten. Eine derartige Verbindung erhält man beispielsweise bei einem U-förmigen Querschnitt durch Verschweißen der jeweiligen Endabschnitte der U-Form mit den Zwischenabschnitten. Hingegen ergibt sich durch einen C-förmigen Querschnitt die Möglichkeit, die Außenabdeckung mit den jeweiligen parallel verlaufenden Innenabschnitten zu verbinden, so dass sich eine besonders ebene Außenseite des Wandabschnitts ohne sichtbare Verbindungselemente ergibt.

Auch ist es äußert vorteilhaft, wenn die Innenabschnitte und/oder die Innenabdeckungen Befestigungselemente, insbesondere in Form von Durchbrechungen, aufweisen. Diese erlauben nach dem Einbau des Wandabschnitts in einen Fahrzeugaufbau oder Container eine Sicherung der Ladung. Die Befestigungselemente können hierfür als Ösen, Haken, Bohrungen oder sonstige Ausbuchtungen ausgebildet sein. Auch in diesem Zusammenhang bietet sich eine Schweißverbindung zwischen Innenabdeckung und Grundprofil an, um einen sicheren Halt der Ladung sicherzustellen.

Ebenso kann es von großem Vorteil sein, wenn das Grundprofil aus Einzelelementen besteht, die an Kontaktstellen miteinander verbunden, insbesondere verschweißt oder verklebt, sind. Hierdurch wird vor allem die Herstellung des Grundprofils vereinfacht, das je nach Länge des gewünschten Wandprofils auch weit über 20 Meter betragen kann.

Der erfindungsgemäße Fahrzeugaufbau, insbesondere in Form eines Wechselaufbaus oder eines Sattelaufliegers für Lastkraftwagen, bzw. der erfindungsgemäße Großraumbehälter, insbesondere in Form eines Containers, zeichnet sich schließlich dadurch aus, dass der Wandabschnitt gemäß einem oder mehreren Aspekten der bisherigen Beschreibung ausgebildet ist, wobei hierbei die genannten Vorteile auch nach Einbau des Wandabschnitts erhalten bleiben.

Weitere Vorteile der Erfindung sind im Zusammenhang mit den nachfolgenden Ausführungsbeispielen beschrieben. Es zeigen:
- **Figur 1**: eine Draufsicht eines Ausschnitts eines Grundprofils eines er- findungsgemäßen Wandabschnitts,
- **Figur 2**: einen Ausschnitt eines erfindungsgemäßen Wandabschnitts in der Draufsicht,
- **Figur 3**: eine Vergrößerung des Ausschnitts A in Figur 2,
- **Figur 4**: einen weiteren Ausschnitt eines erfindungsgemäßen Wandab- schnitts in der Draufsicht, und
- **Figur 5**: eine Frontansicht der Innenseite eines erfindungsgemäßen Fahrzeugaufbaus.

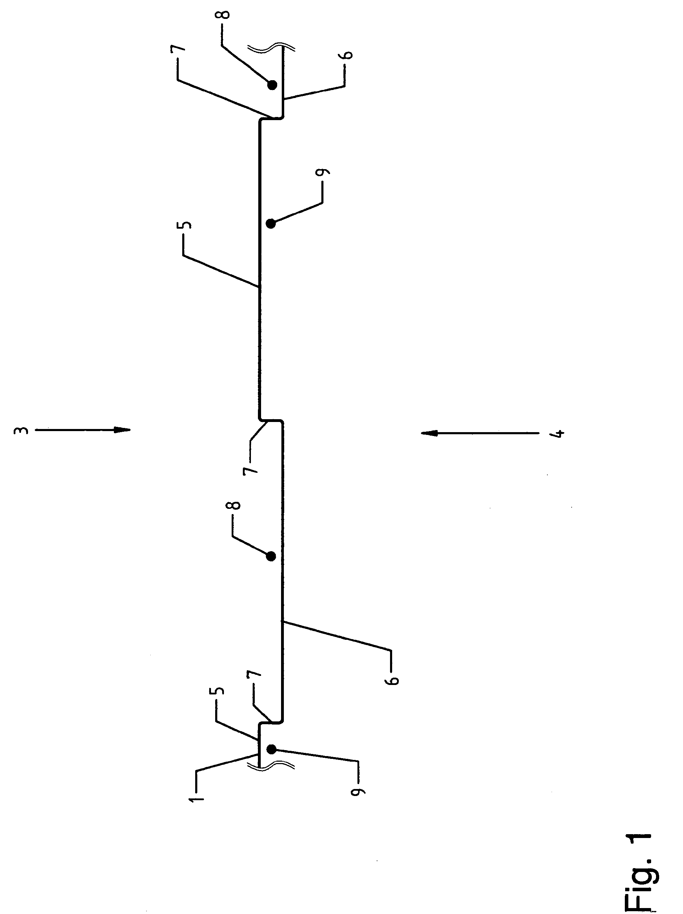

Figur 1 zeigt eine Draufsicht eines Grundprofils 1 eines erfindungsgemäßen Wandabschnitts 2, das sich senkrecht zur Zeichenebene erstreckt, wobei das Grundprofil 1 und der dieses aufweisende Wandabschnitt 2 eine Innenseite 3, die nach Einbau in einen entsprechenden Fahrzeugaufbau oder Container nach innen zeigt, und eine Außenseite 4, die entsprechend nach außen zeigt, aufweist.

Das Grundprofil 1 ist gesickt ausgebildet, d.h. es weist zur Innenseite 3 gerichtete Innenabschnitte 5 und zur Außenseite 4 gerichtete Außenabschnitte 6 auf. Zwischen den Innenabschnitten 5 und den Außenabschnitten 6 verläuft das Grundprofil 1 schließlich in Form von abgekanteten Zwischenabschnitten 7.

Durch diese Abkantung entstehen schließlich Innenvertiefungen 8, die von jeweils zwei benachbarten Zwischenabschnitten 7 und den dazwischen angeordneten Außenabschnitten 6 gebildet werden. Analog entstehen Außenvertiefungen 9, die entsprechend von zwei benachbarten Zwischenabschnitten 7 und den dazwischen angeordneten Innenabschnitten 5 begrenzt werden.

An dieser Stelle sei bemerkt, dass Figur 1 lediglich einen Ausschnitt eines Grundprofils 1 zeigt, wobei dessen Verlauf durch die alternierende Abfolge der gezeigten Innenvertiefungen 8 und Außenvertiefungen 9 gekennzeichnet ist. An den jeweiligen Enden der Grundprofile 1 können schließlich Verbindungselemente zur Verbindung mit weiteren Wandabschnitten 2 oder entsprechende Abschlusselemente angeordnet sein.

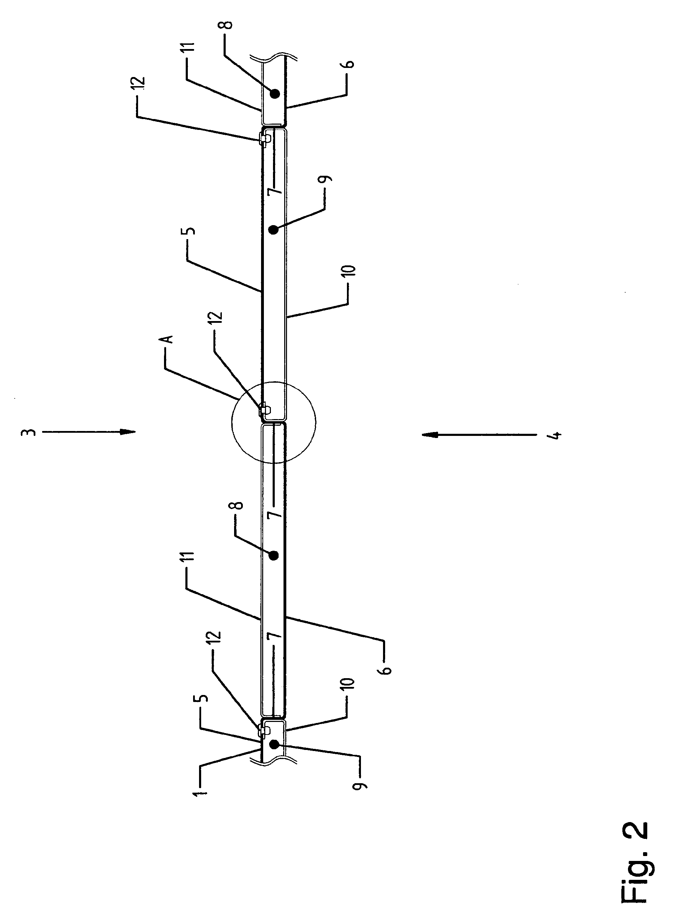

Das Wesen der Erfindung ist beispielsweise Figur 2 zu entnehmen. So sind die Außenvertiefungen 9 mit Außenabdeckungen 10 versehen, die zwischen zwei benachbarten Zwischenabschnitten 7 verlaufen und mit den an diese Zwischenabschnitte 7 angrenzenden Außenabschnitten 6 die Außenseite 4 des Wandabschnitts 2 bilden. Ebenso sind die Innenvertiefungen 8 mit Innenabdeckungen 11 versehen, die zwischen zwei benachbarten Zwischenabschnitten 7 verlaufen und mit den an diese Zwischenabschnitte 7 angrenzenden Innenabschnitten 5 die Innenseite 3 des Wandabschnitts 2 bilden. Im Ergebnis erhält man einen doppelwandigen Wandabschnitt 2 mit einer ebenen Innenseite 3 und einer ebenen Außenseite 4, die hierdurch auf einfache Weise mit Werbe- oder sonstigen Aufschriften versehen werden kann. Auch erhält der Wandabschnitt 2 durch das gesickte Grundprofil 1 eine hohe Stabilität, die eine hohe Lebensdauer des Wandabschnitts 2 gewährleistet. Die Anordnung der Innenabdeckungen 11 und der Außenabdeckungen 10 führt schließlich zu einem doppelwandigen Wandabschnitt 2, bei dem geringere Beschädigungen der Innenseite 3 nicht unmittelbar zu einer Verformung der Außenseite 4 führen und umgekehrt.

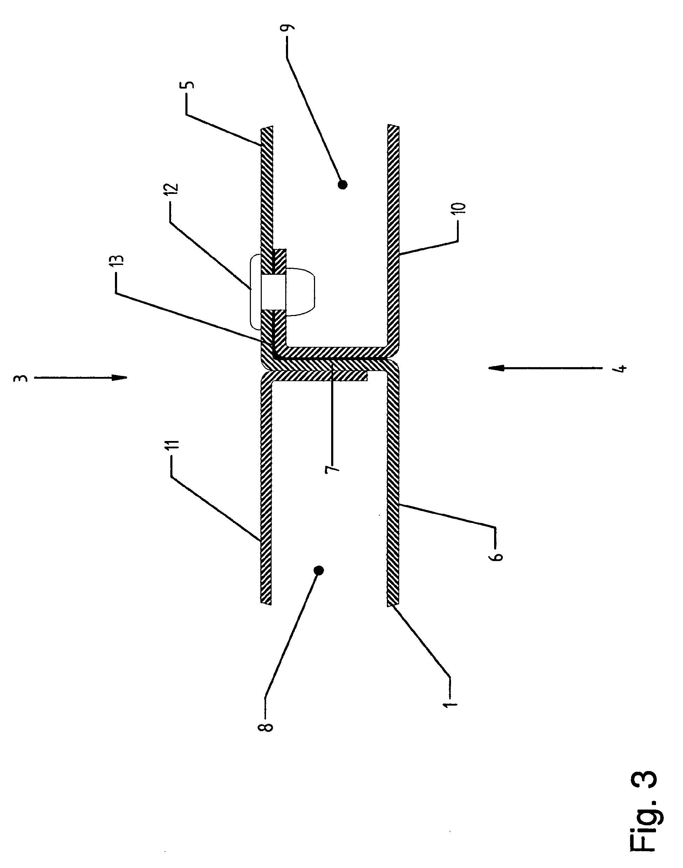

Die Gestaltung der Innenabdeckungen 11 und der Außenabdeckungen 10 kann der Zusammenschau der Figuren 2 und 3, die eine vergrößerte Darstellung des Ausschnitts A in Figur 2 darstellt, entnommen werden. Wie ersichtlich, weisen die Innenabdeckungen 11 und die Außenabdeckungen 10 unterschiedliche Querschnitte auf. Zudem sind auch die jeweiligen Befestigungen von unterschiedlicher Ausführung. So sind die Innenabdeckungen 11 mit den angrenzenden Zwischenabschnitten 7 verklebt oder verschweißt und weisen einen U-förmigen Querschnitt auf. Auf diese Weise erhält man eine Verbindung zwischen Innenabdeckung 11 und Grundprofil 1, die sich durch eine hohe Festigkeit auszeichnet, so dass die Gefahr von Verformungen durch ungesicherte Last oder Gabelstaplerzinken minimiert werden kann. Im Gegensatz dazu besitzen die Außenabdeckungen 10 einen C-förmigen Querschnitt. Hierdurch können die Außenabdeckungen 10 von innen mit Hilfe von beispielsweise Nietverbindungen 12 mit den Innenabschnitten 5 verbunden werden. Hierdurch weist die Außenseite 4 des Wandabschnitts 2 durch die innenliegende Befestigung der Außenabdeckungen 10 eine besonders makellose Oberfläche auf, die sich insbesondere zum Bedrucken eignet. Selbstverständlich können die Innenabdeckungen 11 und die Außenabdeckungen 10 auch den selben Querschnitt aufweisen oder auf die gleiche Weise mit dem Grundprofil 1 verbunden sein. Auch können die Außenabdeckungen 10 angeschweißt oder angeklebt sein und die Innenabdeckungen 11 lösbar, z.B. mit Hilfe von Nietverbindungen 12, befestigt sein.

Figur 3 lässt sich zudem entnehmen, dass zwischen den Außenabdeckungen 10 und den Zwischenabschnitten 7 bzw. den Innenabschnitten 5 des Grundprofils 1 eine Dichtmasse 13 angeordnet sein kann, um ein Eindringen von Feuchtigkeit in den späteren Fahrzeugaufbau bzw. Container zu verhindern.

Weiterhin ist aus den genannten Figuren ersichtlich, dass die Zwischenabschnitte 7 im Wesentlichen senkrecht zu den Innenabschnitten 5 und/oder den Außenabschnitten 6 verlaufen und somit deren Abstand zueinander festlegen.

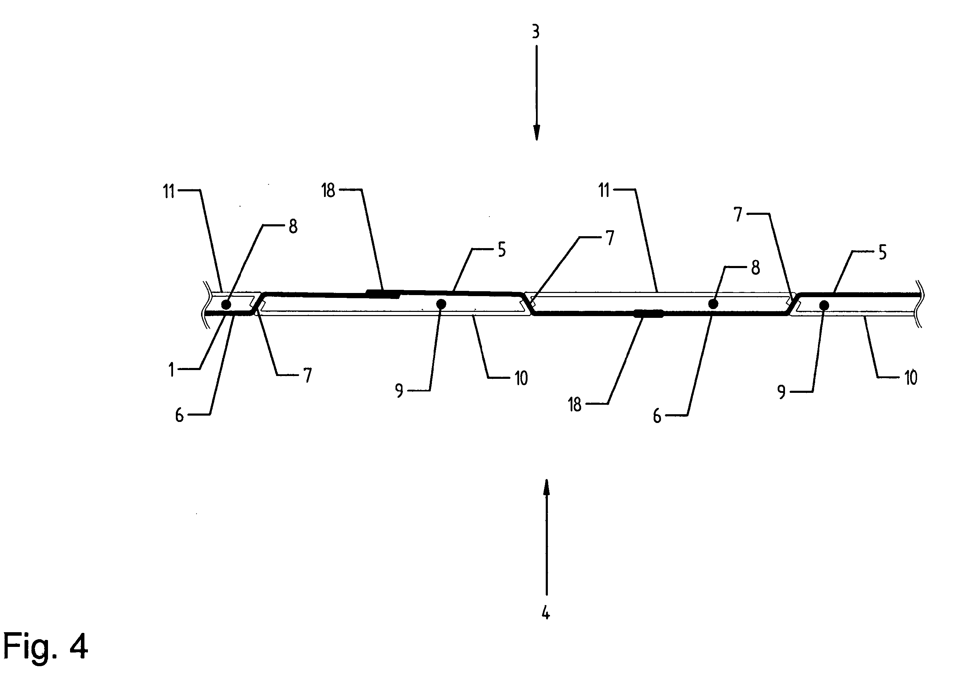

Alternativ können die Zwischenabschnitte 7 aber auch in einem spitzen oder stumpfen Winkel hinsichtlich der Innenabschnitte 5 bzw. der Außenabschnitte 6 verlaufen. Letztere Alternative ist in Figur 4 dargestellt, wobei die Innenabdeckungen 11 und Außenabdeckungen 10 einen an die Übergangswinkel angepassten trapezförmigen Querschnitt aufweisen. Wiederum wird auch hier der Abstand der parallel verlaufenden Innenabschnitte 5 und Außenabschnitte 6 im Wesentlichen durch die Länge der Zwischenabschnitte 7 (bezogen auf die Blattebene) bestimmt.

Darüber hinaus zeigt Figur 4, dass das Grundprofil 1 aus mehreren Einzelelemente bestehen kann, die an entsprechenden Kontaktstellen 18 miteinander verbunden, beispielsweise verschweißt, sind. Hierbei können die jeweiligen Einzelelemente überlappend miteinander verbunden sein (siehe Figur 4: linke Kontaktstelle 18). Ebenso kann die Verbindung durch Stumpfschweißnähte erfolgen, wie es in Figur 4 am Beispiel der rechten Kontaktstelle 18 gezeigt ist. Zudem sei erwähnt, dass die Einzelelemente eine beliebige Länge aufweisen können. So kann ein Einzelelement lediglich einen kurzen Abschnitt des Grundprofils 1 umfassen. Ebenso ist es jedoch auch möglich, dass ein Einzelelement eine Vielzahl der Innenabschnitte 5 oder Außenabschnitte 6 überspannt.

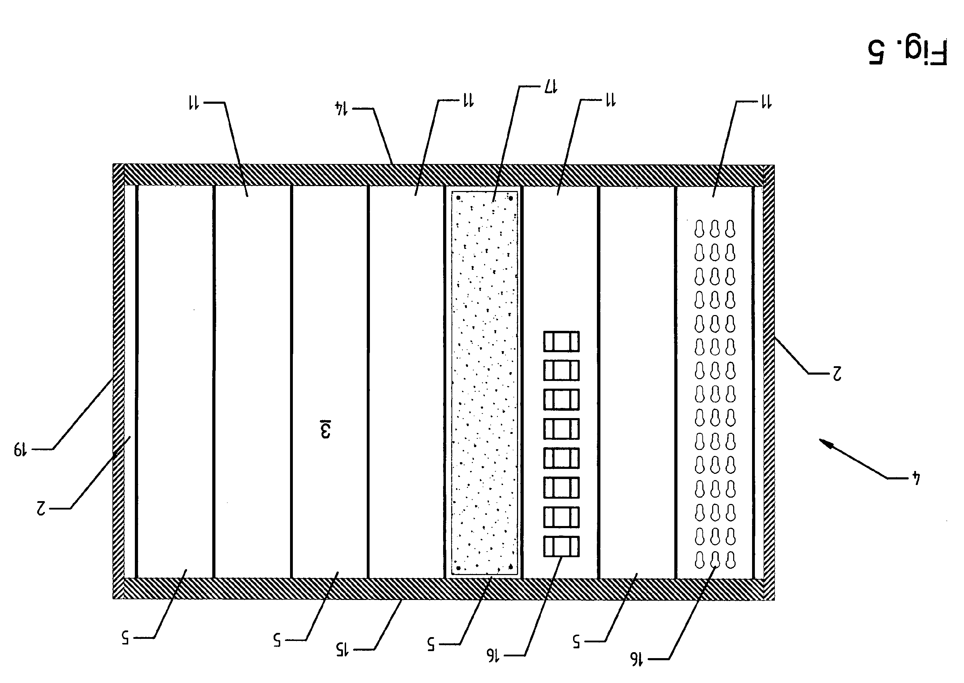

Schließlich ist in Figur 5 ein erfindungsgemäßer Fahrzeugaufbau mit einem in der Zeichenebene liegenden Wandabschnitt 2 dargestellt, wobei alternierend die Innenabschnitte 5 und die dazwischen angeordneten Innenabdeckungen 11 zu sehen sind, die wiederum mit den Innenabschnitten 5 die Innenseite 3 des Wandabschnitts 2 bilden.

Benachbart zum mittigen Wandabschnitt 2 verläuft senkrecht zur Zeichenebene ein weiterer Wandabschnitt 2, der den Fahrzeugaufbau nach links abschließt. Auf der rechten Seite ist eine weitere Wandung 19 gezeigt, die als Türeinheit ausgebildet sein kann oder eine entsprechende Türeinheit aufweisen kann. Selbstverständlich kann diese Wandung 19 auch in Form eines erfindungsgemäßen Wandabschnitts 2 ausgebildet sein und wahlweise entsprechende Ladungsöffnungen besitzen. Des Weiteren weist der Fahrzeugaufbau einen Bodenabschnitt 14 und einen Deckenabschnitt 15 auf, die auf bekannte Weise mit den Wandabschnitten 2 verbunden sind.

Ferner weisen die Innenabschnitte 5 und/oder die Innenabdeckungen 11 Befestigungselemente in Form unterschiedlich geformter Durchbrechungen 16 auf, um entsprechendes Transportgut an der Innenseite 3 befestigen zu können. Ebenso können die Innenabschnitte 5 und/oder die Innenabdeckungen 11 Verkleidungen 17, z.B. in Form von Holzvertäfelungen aufweisen, um einen zusätzlichen Schutz vor Beschädigungen der Innenwand bereitzustellen. In diesem Zusammenhang sei erwähnt, dass sich die Anordnung und Auswahl der Befestigungselemente bzw. etwaiger Vertäfelungen nach dem Einsatzzweck des Fahrzeugaufbaus richtet und auch nur eine Art oder eine beliebige Kombination der genannten Elemente vorhanden sein kann. Auch können die genannten Elemente nur an einigen der Innenabdeckungen 11 und/oder Innenabschnitte 5 vorgesehen sein.

Analog zu den vorhergehenden Ausführungen lässt sich der erfindungsgemäße Wandabschnitt 2 selbstverständlich auch als Wandabschnitt 2 für einen Container verwenden.

Im Übrigen ist die Erfindung nicht auf die dargestellten Ausführungsbeispiele beschränkt. Vielmehr sind sämtliche Kombinationen der beschriebenen Einzelmerkmale, wie sie in den Ansprüchen, der Beschreibung sowie den Figuren gezeigt oder beschrieben sind und soweit eine entsprechende Kombination technisch möglich bzw. sinnvoll erscheint, Gegenstand der Erfindung.

### Bezugszeichenliste

- 1: Grundprofil
- 2: Wandabschnitt
- 3: Innenseite
- 4: Außenseite
- 5: Innenabschnitt
- 6: Außenabschnitt
- 7: Zwischenabschnitt
- 8: Innenvertiefung
- 9: Außenvertiefung
- 10: Außenabdeckung
- 11: Innenabdeckung
- 12: Nietverbindung
- 13: Dichtmasse
- 14: Bodenabschnitt
- 15: Deckenabschnitt
- 16: Durchbrechung
- 17: Verkleidung
- 18: Kontaktstelle
- 19: Wandung

## Patentansprüche

1. Doppelwandiger Wandabschnitt für einen Fahrzeugaufbau, wie beispielsweise einen Wechselaufbau oder Sattelauflieger für Lastkraftwagen, oder einen Großraumbehälter, insbesondere einen Container, wobei
- der Wandabschnitt (2) eine im Wesentlichen ebene Innenseite (3) und eine im Wesentlichen ebene Außenseite (4) sowie ein vorzugsweise durchgängiges Grundprofil (1) aufweist,
- das Grundprofil (1) derart abgekantet ist, dass es zur Innenseite (3) gerichtete Innenabschnitte (5) und zur Außenseite (4) gerichtete Außenabschnitte (6) aufweist,
- die Innenabschnitte (5) und die Außenabschnitte (6) parallel zueinander verlaufen, und
- das Grundprofil (1) zwischen den Innenabschnitten (5) und den Außenabschnitten (6) in Form von abgekanteten Zwischenabschnitten (7) verläuft, wobei jeweils zwei Zwischenabschnitte (7) mit einem dazwischen angeordneten Außenabschnitt (6) eine Innenvertiefung (8) und zwei Zwischenabschnitte (7) mit einem dazwischen angeordneten Innenabschnitt (5) eine Außenvertiefung (9) begrenzen,
**dadurch gekennzeichnet, dass**
- die Außenvertiefungen (9) mit Außenabdeckungen (10) versehen sind, die zwischen zwei benachbarten Zwischenabschnitten (7) verlaufen und mit den an diese Zwischenabschnitte (7) angrenzenden Außenabschnitten (6) die Außenseite (4) des Wandabschnitts (2) bilden und
- die Innenvertiefungen (8) mit Innenabdeckungen (11) versehen sind, die zwischen zwei benachbarten Zwischenabschnitten (7) verlaufen und mit den an diese Zwischenabschnitte (7) angrenzenden Innenabschnitten (5) die Innenseite (3) des Wandabschnitts (2) bilden.

2. Wandabschnitt gemäß dem vorangegangenen Anspruch, **dadurch gekennzeichnet, dass** die Innenabdeckungen (11) und/oder Außenabdeckungen (10) mit benachbarten Zwischenabschnitten (7) in Verbindung stehen.

3. Wandabschnitt gemäß einem oder mehreren der vorangegangenen Ansprüche, **dadurch gekennzeichnet, dass** die Innenabdeckungen (11) und/oder Außenabdeckungen (10) mit dem Grundprofil (1) durch Schweißen, Kleben und/oder mit Hilfe von Schraub- oder Nietverbindungen (12) verbunden sind.

4. Wandabschnitt gemäß einem oder mehreren der vorangegangenen Ansprüche, **dadurch gekennzeichnet, dass** die Innenabdeckungen (11) mit dem Grundprofil (1) durch Schweißen und die Außenabdeckungen (10) mit dem Grundprofil (1) mit Hilfe von Schraub- oder Nietverbindungen (12) verbunden sind.

5. Wandabschnitt gemäß einem oder mehreren der vorangegangenen Ansprüche, **dadurch gekennzeichnet, dass** zwischen den Innenabdeckungen (11) und dem Grundprofil (1) und/oder zwischen den Außenabdeckungen (10) und dem Grundprofil (1) eine Dichtmasse (13), wie beispielsweise Polyurethan, angeordnet ist.

6. Wandabschnitt gemäß einem oder mehreren der vorangegangenen Ansprüche, **dadurch gekennzeichnet, dass** die Zwischenabschnitte (7) im Wesentlichen senkrecht zu den Innenabschnitten (5) und/oderden Außenabschnitten (6) verlaufen und deren Abstand zueinander festlegen.

7. Wandabschnitt gemäß einem oder mehreren der Ansprüche 1 bis 5, **dadurch gekennzeichnet, dass** die Zwischenabschnitte (7) in einem spitzen oder stumpfen Winkel hinsichtlich der Innenabschnitte (5) bzw. der Außenabschnitte (6) verlaufen und deren Abstand zueinander festlegen.

8. Wandabschnitt gemäß einem oder mehreren der vorangegangenen Ansprüche, **dadurch gekennzeichnet, dass** die Innenabdeckungen (11) und/oder Außenabdeckungen (10) einen im Wesentlichen rechteckigen, U-förmigen oder C-förmigen Querschnitt aufweisen.

9. Wandabschnitt gemäß einem oder mehreren der vorangegangenen Ansprüche, **dadurch gekennzeichnet, dass** die Innenabdeckungen (11) einen im Wesentlichen U-förmigen Querschnitt und die Außenabdeckungen (10) einen im Wesentlichen C-förmigen Querschnitt aufweisen.

10. Wandabschnitt gemäß einem oder mehreren der vorangegangenen Ansprüche, **dadurch gekennzeichnet, dass** die Innenabschnitte (5) und/oder die Innenabdeckungen (11) Befestigungselemente, insbesondere in Form von Durchbrechungen (16), aufweisen.

11. Wandabschnitt gemäß einem oder mehreren der vorangegangenen Ansprüche, **dadurch gekennzeichnet, dass** das Grundprofil (1) aus Einzelelementen besteht, die an Kontaktstellen (18) miteinander verbunden, insbesondere verschweißt oder verklebt, sind.

12. Fahrzeugaufbau, insbesondere Wechselaufbau oder Sattelauflieger für Lastkraftwagen, oder Großraumbehälter, insbesondere Container, mit einem Bodenabschnitt (14) und wenigstens einem Wandabschnitt (2), **dadurch gekennzeichnet, dass** der Wandabschnitt (2) gemäß einem oder mehreren der vorangegangenen Ansprüche ausgebildet ist.

## Claims

1. A double-walled wall segment for a vehicle body, such as an interchangeable body or semi-trailer for commercial vehicles, or a container, particularly a shipping container,
- the wall segment (2) comprising a substantially flat inner side (3) and a substantially flat outer side (4) and a preferably continuous base profile (1),
- the base profile (1) being folded such that said profile comprises inner segments (5) facing the inner side (3) and outer segments (6) facing the outer side (4),
- the inner segments (5) and the outer segments (6) running in parallel to each other, and
- the base profile (1) running between the inner segments (5) and the outer segments (6) in the form of folded intermediate segments (7), each two intermediate segments (7) together with one outer segment (6) bounding an inner recess (8) disposed therebetween and two intermediate segments (7) together with one inner segment (5) bounding an outer recess (9) disposed therebetween,
**characterized in that**
- the outer recesses (9) are provided with outer covers (10) running between two adjacent intermediate segments (7) and together with the outer segments (6) adjacent to said intermediate segments (7) form the outer side (4) of the wall segment (2), and
- the inner recesses (8) are provided with inner covers (11) running between two adjacent intermediate segments (7) and together with the inner segments (5) adjacent to said intermediate segments (7) form the inner side (3) of the wall segment (2).

2. The wall segment according to the preceding claim, **characterized in that** the inner covers (11) and/or outer covers (10) are connected to adjacent intermediate segments (7).

3. The wall segment according to one or more of the preceding claims, **characterized in that** the inner covers (11) and/or outer covers (10) are connected to the base profile (1) by welding, gluing, and/or using bolted or riveted connections (12).

4. The wall segment according to one or more of the preceding claims, **characterized in that** the inner covers (11) are connected to the base profile (1) by welding and the outer covers (10) are connected to the base profile (1) by using bolted or riveted connections (12).

5. The wall segment according to one or more of the preceding claims, **characterized in that** a sealing compound (13), such as polyurethane, is disposed between the inner covers (11) and the base profile (1) and/or between the outer covers (10) and the base profile (1).

6. The wall segment according to one or more of the preceding claims, **characterized in that** the intermediate segments (7) run substantially perpendicular to the inner segments (5) and/or the outer segments (6) and determine the spacing thereof to each other.

7. The wall segment according to one or more of the claims 1 to 5, **characterized in that** the intermediate segments (7) run at an acute or obtuse angle with respect to the inner segments (5) or the outer segments (6) and determine the spacing thereof to each other.

8. The wall segment according to one or more of the preceding claims, **characterized in that** the inner covers (11) and/or the outer covers (10) comprise a substantially rectangular, U-shaped, or C-shaped cross section.

9. The wall segment according to one or more of the preceding claims, **characterized in that** the inner covers (11) comprise a substantially U-shaped cross section, and the outer covers (10) comprise a substantially C-shaped cross section.

10. The wall segment according to one or more of the preceding claims, **characterized in that** the inner segments (5) and/or the inner covers (11) comprise mounting elements, particularly in the form of openings (16).

11. The wall segment according to one or more of the preceding claims, **characterized in that** the base profile (1) is made of individual elements connected, particularly welded or glued, to each other at contact locations (18).

12. A vehicle body, particularly an interchangeable body or semi-trailer for commercial vehicles, or a container, particularly a shipping container, having a floor segment (14) and at least one wall segment (2), **characterized in that** the wall segment (2) is implemented according to one or more of the preceding claims.

## Revendications

1. Section de mur à double paroi pour une caisse de véhicule, telle qu'une caisse mobile ou une semi-remorque pour poids lourds, ou un récipient de grande capacité, particulièrement un conteneur, sachant que
- la section de mur (2) présente une face intérieure (3) essentiellement plane et une face extérieure (4) essentiellement plane ainsi qu'un profilé de fond (1) de préférence continu,
- le profilé de fond (1) est replié de telle manière qu'il présente des sections intérieures (5) dirigées vers la face intérieure (3) et des sections extérieures (6) dirigées vers la face extérieure (4),
- les sections intérieures (5) et les sections extérieures (6) s'allongent parallèlement les unes aux autres, et
- le profilé de fond (1) se présente entre les sections intérieures (5) et les sections extérieures (6) sous la forme de sections intermédiaires (7) repliées, sachant que deux sections intermédiaires (7) respectivement limitent avec une section extérieure (6) disposée entre elles un approfondissement intérieur (8) et deux sections intermédiaires (7) respectivement limitent avec une section intérieure (5) disposée entre elles un approfondissement extérieur (9),
**caractérisée en ce que**
- les approfondissements extérieurs (9) sont dotés de recouvrements extérieurs (10), qui s'allongent entre deux sections intermédiaires (7) adjacentes et forment avec les sections extérieures (6) adjacentes à ces sections intermédiaires (7) la face extérieure (4) de la section de mur (2) et
- les approfondissements intérieurs (8) sont dotés de recouvrements intérieurs (11), qui s'allongent entre deux sections intermédiaires (7) adjacentes et forment avec les sections intérieures (5) adjacentes à ces sections intermédiaires (7) la face intérieure (3) de la section de mur (2).

2. Section de mur selon la revendication précédente, **caractérisée en ce que** les recouvrements intérieurs (11) et/ou les recouvrements extérieurs (10) sont en relation avec des sections de intermédiaires (7) adjacentes.

3. Section de mur selon l'une quelconque ou plusieurs des revendications précédentes, **caractérisée en ce que** les recouvrements intérieurs (11) et/ou les recouvrements extérieurs (10) sont reliés au profilé de fond (1) par soudage, collage et/ou à l'aide d'assemblages boulonnés ou rivés (12).

4. Section de mur selon l'une quelconque ou plusieurs des revendications précédentes, **caractérisée en ce que** les recouvrements intérieurs (11) sont reliés au profilé de fond (1) par soudage et les recouvrements extérieurs (10) sont reliés au profilé de fond (1) à l'aide d'assemblages boulonnés ou rivés (12).

5. Section de mur selon l'une quelconque ou plusieurs des revendications précédentes, **caractérisée en ce qu'**un mastic d'étanchéité (13), par exemple du polyuréthane, est disposé entre les recouvrements intérieurs (11) et le profilé de fond (1) et/ou entre les recouvrements extérieurs (10) et le profilé de fond (1).

6. Section de mur selon l'une quelconque ou plusieurs des revendications précédentes, **caractérisée en ce que** les sections intermédiaires (7) s'étendent essentiellement perpendiculairement aux sections intérieures (5) et/ou aux sections extérieures (6) et déterminent leurs distances les unes par rapport aux autres.

7. Section de mur selon l'une quelconque ou plusieurs des revendications 1 à 5, **caractérisée en ce que** les sections intermédiaires (7) s'étendent à un angle aigu ou obtus par rapport aux sections intérieures (5) ou aux sections extérieures (6) et déterminent leurs distances les unes par rapport aux autres.

8. Section de mur selon l'une quelconque ou plusieurs des revendications précédentes, **caractérisée en ce que** les recouvrements intérieurs (11) et/ou les recouvrements extérieurs (10) présentent une section essentiellement rectangulaire, en U ou en C.

9. Section de mur selon l'une quelconque ou plusieurs des revendications précédentes, **caractérisée en ce que** les recouvrements intérieurs (11) présentent une section essentiellement en U et les recouvrements extérieurs (10) présentent une section essentiellement en C.

10. Section de mur selon l'une quelconque ou plusieurs des revendications précédentes, **caractérisée en ce que** les sections intérieures (5) et/ou les recouvrements intérieurs (11) présentent des éléments de fixation, particulièrement sous forme de perforations (16).

11. Section de mur selon l'une quelconque ou plusieurs des revendications précédentes, **caractérisée en ce que** le profilé de fond (1) se compose d'éléments individuels, qui sont reliés les uns aux autres, particulièrement soudés ou collés, à des points de contact (18).

12. Caisse de véhicule, particulièrement caisse mobile ou semi-remorque pour poids lourds, ou récipient de grande capacité, particulièrement un conteneur, avec une section de fond (14) et au moins une section de mur (2), **caractérisée en ce que** la section de mur (2) se présente sous une forme selon l'une quelconque ou plusieurs des revendications précédentes.
